(19) Europäisches Patentamt / European Patent Office / Office européen des brevets

(11) **EP 4 435 733 B1**

(12) **EUROPEAN PATENT SPECIFICATION**

(45) Date of publication and mention
of the grant of the patent:
**04.02.2026  Bulletin 2026/06**

(21) Application number: **23217896.2**

(22) Date of filing: **19.12.2023**

(51) International Patent Classification (IPC):
**G06V 20/13** (2022.01)        **G06V 20/10** (2022.01)

(52) Cooperative Patent Classification (CPC):
**G06V 20/13; G06V 20/188;** G06V 20/68

(54) **METHOD AND SYSTEM FOR ESTIMATION OF COVER CROP DURATION AND INTEGRATED COVER CROP INDEX (ICCI)**

VERFAHREN UND SYSTEM ZUR SCHÄTZUNG DER ANBAUDAUER VON DECKFRÜCHTEN UND DES INTEGRIERTEN DECKFRUCHTINDEX (ICCI)

PROCÉDÉ ET SYSTÈME D'ESTIMATION DE DURÉE DE CULTURE DE COUVERTURE ET D'INDICE DE CULTURE DE COUVERTURE INTÉGRÉ (ICCI)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **21.03.2023  IN 202321019091**

(43) Date of publication of application:
**25.09.2024  Bulletin 2024/39**

(73) Proprietor: **Tata Consultancy Services Limited**
**400 021 Mumbai, Maharashtra (IN)**

(72) Inventors:
• **MOHITE, Jayantrao**
**400601 Thane (West), Maharashtra (IN)**
• **SAWANT, Suryakant Ashok**
**411013 Pune, Maharashtra (IN)**
• **AGRAWAL, Rishabh**
**452018 Indore, Madhya Pradesh (IN)**
• **PANDIT, Ankur**
**452018 Indore, Madhya Pradesh (IN)**
• **PAPPULA, Srinivasu**
**452018 Madhapur Hyderabad, Telangana (IN)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**CA-A1- 3 186 476**

• **NOWAK BENJAMIN ET AL: "Soil-climate factors have a greater influence on the presence of winter cover crops than regulatory constraints in France", AGRONOMY FOR SUSTAINABLE DEVELOPMENT, SPRINGER PARIS, PARIS, vol. 42, no. 2, 1 April 2022 (2022-04-01), XP037796074, ISSN: 1774-0746, [retrieved on 20220413], DOI: 10.1007/S13593-022-00770-Y**
• **MUNOZ J D ET AL: "Nonlinear hierarchical models for predicting cover crop biomass using Normalized Difference Vegetation Index", REMOTE SENSING OF ENVIRONMENT, ELSEVIER, XX, vol. 114, no. 12, 15 December 2010 (2010-12-15), pages 2833 - 2840, XP027305454, ISSN: 0034-4257, [retrieved on 20100920]**

**Description**

CROSS-REFERENCE TO RELATED APPLICATIONS AND PRIORITY

The present application claims priority to Indian application no. 202321019091, filed on March 21,2023.

TECHNICAL FIELD

The embodiments herein generally relate to the field of crop monitoring and estimation and, more particularly, to a method and system for estimation of cover crop duration and Integrated Cover Crop Index (ICCI).

BACKGROUND

There are multiple organizations and entities that are encouraging and incentivizing the farmers to cultivate the cover crop, as it mainly minimizes the nitrous oxide N2O and Carbon (C) emissions from the soil. The incentives are being offered based on the type and duration of cover crop. However, detection of cover crop and estimation of precise duration has certain challenges from monitoring and verification standpoint.

The cover crops are planted during the harvest of main crop to reduce the effort (planting/sowing), competition from weeds and reduce the time of soil exposure to atmosphere. Basically, cover crop is also a type of crop such as peas, barley, rye, etc. However, it is not managed for commercial production as the main purpose is to cover the soil rather than using it for consumption or sell. There is a chance that it can be confused with main crop. Hence simply applying the crop detection algorithm may not be useful for detection of the cover crop. Further, late main crops can confuse with cover crops. Hence separation of main crop before applying ML based model for detection of exact cover crop is needed to avoid false positives. In most cases, where the farmers are not going for cover crop, there is some kind of sparse grass or weeds that grow, which could be confused with the cover crop. Separating the fields just based on vegetation index threshold such as Normalized Difference Vegetation Index (NDVI) to detect whether the soil is covered with vegetation is not sufficient and possibly leads to error.

Errors in estimating the duration of cover crop possibly occur due to duration of snow cover (mainly in the northern latitudes), duration of dormant period due to low temperatures even though the snow cover is absent. Hardly any prior works capture the snow angle. Moreover, precise detection of end of main crop and/or start/end of cover crop is needed for precise estimation of presence and duration of cover crop.

Canadian Patent Application CA3186476A1 describes a method of predicting a tillage practice. Particularly, the method includes receiving a time series of satellite imagery, the time series of satellite imagery covering at least a geographic region, during a predetermined time period, and generating a first set of field level zonal summary time series from the time series of satellite imager for at least one field within the geographic region. Further, the field level zonal summary time series includes at least a normalized difference tillage index (NDTI) time series and a normalized difference vegetation index (NDVI) time series. Furthermore, for each field in the geographic region, a dormant period is determined during the predetermined time period and determining the difference between minimum NDTI value of all observations during the dormant period and the 90th percentile of NDTI values from historical data and apply a decision tree classifier to a field (*Abstract*).

SUMMARY

Embodiments of the present disclosure present technological improvements as solutions to one or more of the above-mentioned technical problems recognized by the inventors in conventional systems.

The invention is set out in appended set of claims.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 is a schematic view of an environment where a system is deployed for estimation of cover crop duration and Integrated Cover Crop Index (ICCI), in accordance with some embodiments of the present disclosure.
FIG. 2A is a functional block diagram of a system for estimation of the cover crop duration and the ICCI, in accordance with some embodiments of the present disclosure.

FIG. 2B depicts process flow of the system for estimation of the cover crop duration and the ICCI, in accordance with some embodiments of the present disclosure.

FIGS. 3A through 3B (collectively referred as FIG. 3) is a flow diagram illustrating a method for estimation of the cover crop duration and the ICCI, using the system of FIG. 1, in accordance with some embodiments of the present disclosure.

FIG. 4 depicts a use case example of cover crop identification, in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts.

Existing literature or research attempts hardly capture entire factors for estimation of duration of cover crop considering the complexity involved due to the main crop, grass/weeds, snow cover, dormant period, etc.

Embodiments of the present disclosure provide a method and system for estimation of cover crop duration and generating an Integrated Cover Crop Index (ICCI) Firstly, the method provides identifying main crop and eliminating associated time series data which reduces false positives that may get introduced when main crop and cover crop may be same or when main crop window exceeds its regular duration. Once time series data associated with main crop is removed, the method provides detection of type of cover crop and its exact duration by integrated use of satellite remote sensing (Optical/SAR), the sensor data (proximal sensing, agro-meteorological observations) and field observations and phenology based indicators. The method can precisely estimate the duration of cover crop considering the impact of snow cover, dormant period etc., by integrated use of remote sensing and sensor data along with local domain crop knowledge of the region. The ICCI provides a quantitative measure based on the type of cover crop and duration of the same, that can be used for incentivizing farmers following sustainable cropping practices.

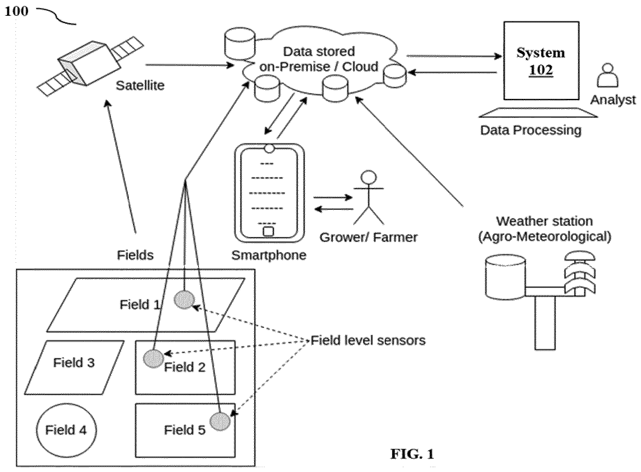

Referring now to the drawings, and more particularly to FIGS. 1 through 4, where similar reference characters denote corresponding features consistently throughout the figures, there are shown preferred embodiments, and these embodiments are described in the context of the following exemplary system and/or method.

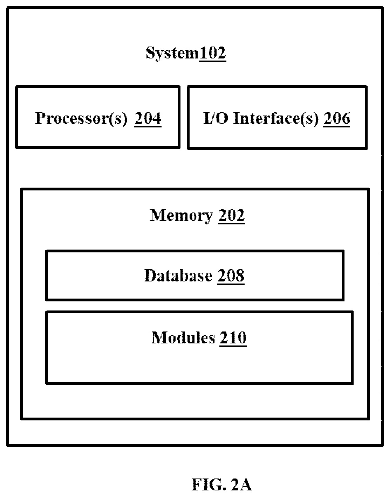

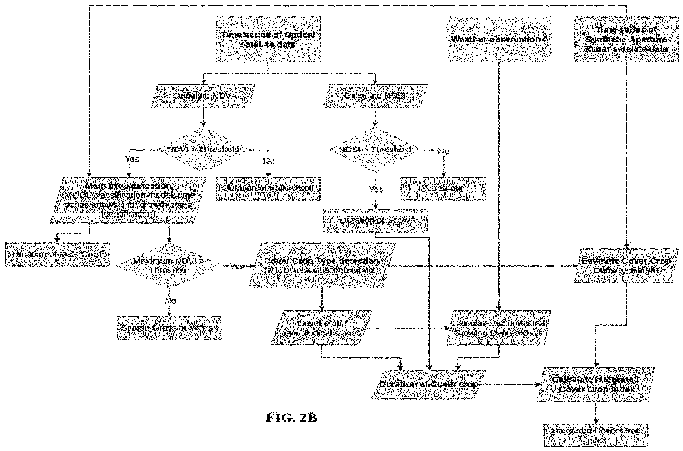

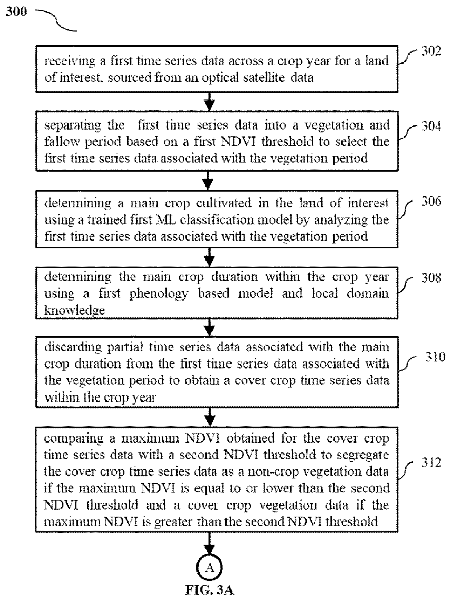

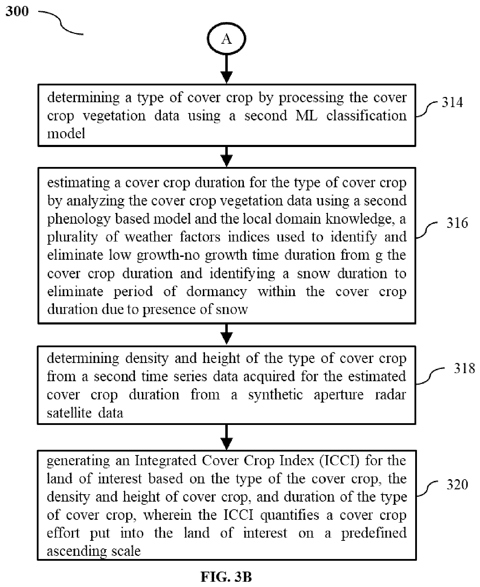

FIG. 1 is a schematic view of an environment 100 where a system 102 is deployed for estimation of cover crop duration and Integrated Cover Crop Index (ICCI), in accordance with some embodiments of the present disclosure. The FIG. 1 depicts a plurality of fields, each field also referred to as land of interest. Optical satellites capture optical (multispectral) satellite data and synthetic aperture radar satellites capture synthetic aperture radar satellite data for an coverage area of satellites. The coverage area includes the plurality of fields. The system 102, with techniques known in the art can geo tag the fields to identify boundaries of each field or the land of interest and segregate the satellite data in accordance with the fields to be consumed by the system for estimation of cover crop duration. Additionally, each field has onsite deployed sensors that directly communicate with a cloud server and associated mobile devices through which respective farmers/ landowners update information related to various events taking place on the field or the land of interest into the cloud server. All information generated at plurality of resources such as sensors on the field, satellite data, local domain knowledge, agro-meteorological data corresponding to each field is stored in the cloud server for every crop year (includes the main crop followed by either fallow period or cover crop and so on) and processed and analyzed by the system 102 to train various Machine Learning (ML) models or Deep Learning (DL) models for main crop detection, cover crop type detection, estimation of cover crop duration and Integrated Cover Crop Index (ICCI). Various phenological models are built to compute various phenological stages of the main and/or cover crop such as start of the season, end of the season, main crop duration and the cover crop duration. The local domain knowledge, refers to using the information on crops grown in the region, their regional sowing and harvesting patterns, overlap with cover crop period etc. The system 102 is further explained with respect to FIG. 2A, FIG.2B and method depicted in flow diagram of FIG. 3.

FIG. 2A is a functional block diagram of the system 102 for estimation of the cover crop duration and the ICCI, in accordance with some embodiments of the present disclosure. In an embodiment, the system 102 includes a processor(s) 204, communication interface device(s), alternatively referred as input/output (I/O) interface(s) 206, and one or more data storage devices or a memory 202 operatively coupled to the processor(s) 204. The system 102 with one or more hardware processors is configured to execute functions of one or more functional blocks of the system 102.

Referring to the components of the system 102, in an embodiment, the processor(s) 204, can be one or more hardware processors 204. In an embodiment, the one or more hardware processors 204 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 204 are configured to fetch and execute computer-readable instructions stored in the memory 202. In an embodiment, the system 102 can be implemented in a variety of computing systems including laptop computers, notebooks, hand-held devices such as mobile phones, workstations, mainframe computers, servers, and the like.

The I/O interface(s) 206 can include a variety of software and hardware interfaces, for example, a web interface, a graphical user interface to display the generated target images and the like and can facilitate multiple communications within a wide variety of networks N/W and protocol types, including wired networks, for example, LAN, cable, etc., and wireless networks, such as WLAN, cellular and the like. In an embodiment, the I/O interface (s) 206 can include one or more ports for connecting to a number of external devices or to another server or devices.

The memory 202 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

In an embodiment, the memory 202 includes a plurality of modules 210 such as a first ML classification model (not shown) for main crop detection, a second ML classification model (not shown) for type of cover crop detection, a first phenology based model (not shown) for estimation duration of main crop, a second phenology based model ( not shown) for estimation of duration of the detected type of cover crop. Here, trained first and second ML model, also can be a Deep Learning Model and is a multi-class model with the classes such as main crops (Barley, Wheat, Soybean, Corn etc.), cover crops of the region (Barley, Rye, Oats etc.,), grass (weed), snow, water, etc. As understood, the main crop and the cover crop list can vary from region to region and is provided above as an example. This output of ML/DL models are further fine-tuned by phenology based threshold for accuracy improvement. As well known in the art, the ML models such Support Vector Machines (SVMs) , Random Forest and the like can be used and built over training dataset for crop classification problem.

The plurality of modules 210 include programs or coded instructions that supplement applications or functions performed by the system 102 for executing different steps involved in the process of estimation of the cover crop duration and the ICCI, being performed by the system 102. The plurality of modules 210, amongst other things, can include routines, programs, objects, components, and data structures, which performs particular tasks or implement particular abstract data types. The plurality of modules 210 may also be used as, signal processor(s), node machine(s), logic circuitries, and/or any other device or component that manipulates signals based on operational instructions. Further, the plurality of modules 210 can be used by hardware, by computer-readable instructions executed by the one or more hardware processors 104, or by a combination thereof. The plurality of modules 210 can include various sub-modules (not shown).

Further, the memory 102 may comprise information pertaining to input(s)/output(s) of each step performed by the processor(s) 104 of the system 102 and methods of the present disclosure. Further, the memory 202 includes a database 208. The database (or repository) 208 may include a plurality of abstracted piece of code for refinement and data that is processed, received, or generated as a result of the execution of the plurality of modules in the module(s) 210. Although the data base 208 is shown internal to the system 102, it will be noted that, in alternate embodiments, the database 208 can also be implemented external to the system 102, and communicatively coupled to the system 102. The data contained within such external database may be periodically updated. For example, new data may be added into the database (not shown in FIG. 2A) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 102 are now explained with reference to FIG. 2B through steps of flow diagram in FIG. 3.

FIG. 2B depicts process flow of the system for estimation of the cover crop duration and the ICCI, in accordance with some embodiments of the present disclosure.

FIGS. 3A through 3B (collectively referred as FIG. 3) is a flow diagram illustrating a method 300 for estimation of the cover crop duration and the ICCI, using the system of FIG. 1, in accordance with some embodiments of the present disclosure.

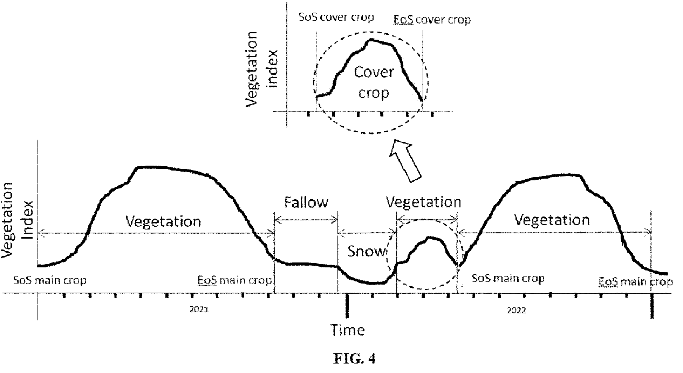

In an embodiment, the system 102 comprises one or more data storage devices or the memory 202 operatively coupled to the processor(s) 204 and is configured to store instructions for execution of steps of the method 300 by the processor(s) or one or more hardware processors 204. The steps of the method 300 of the present disclosure will now be explained with reference to the components or blocks of the system 102 as depicted in FIG. 2A, FIG. 2B, the steps of flow diagram as depicted in FIG. 3 and a use case example of cover crop identification in FIG. 4. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

Referring to FIG. 2B and the steps of the method 300, at step 302 of the method 300, the one or more hardware processors 204 receive a first time series data across the crop year for a land of interest ( field), sourced from the optical satellite data.

At step 304 of the method 300, the one or more hardware processors 204 separate the first time series data into a vegetation and fallow period based on a first NDVI threshold to select the first time series data associated with the vegetation period. The first NDVI threshold of 0.25 is commonly used for separating vegetation and fallow period.

At step 306 of the method 300, the one or more hardware processors determine a main crop cultivated in the land of interest using a trained first ML classification model by analyzing the first time series data associated with the vegetation period.

At step 308 of the method 300, the one or more hardware processors 204 determine the main crop duration within the crop year using the first phenology based model and local domain knowledge. The time-series of NDVI and/or VH is used to detect the local minima and local maxima. Final local minima before the local maxima is called as start of the season and Final local minima after the local maxima is called as end of the season. While referring to any phenology based model herein, input for the model is time-series of satellite based vegetation index such as NDVI or time-series of VH backscatter or both and above mentioned detection of local minima and maxima is carried out on that time-series to detect start and end of the season which will be further used in the analysis.

At step 310 of the method 300, the one or more hardware processors 204 discard partial time series data associated with the main crop duration from the first time series data to obtain a cover crop time series data within the crop year.

At step 312 of the method 300, the one or more hardware processors 204 compare a maximum NDVI obtained for the cover crop time series data with a second NDVI threshold to segregate the cover crop time series data as a non-crop vegetation data if the maximum NDVI is equal to or lower than the second NDVI threshold. Maximum NDVI is the maximum value of NDVI between start and end of the season of vegetation. This is the value between 0 to 1. Use of the maximum NDVI for separation of cover crop from non-cover crop such as grass/weeds is mainly as the grass/weeds are usually sparse and naturally grown, so NDVI value of those non-vegetations may not go beyond 0.5 and can be separated from cover crop. Hence, the method 300 herein uses maximum NDVI as the indicator for separation of cover crop and non-cover crop in overlapping time-series.

At step 314 of the method 300, the one or more hardware processors 204 determine the type of cover crop by processing the cover crop vegetation data using the second ML classification model.

At step 316 of the method 300, the one or more hardware processors 204 estimate the cover crop duration for the type of cover crop by analyzing the cover crop vegetation data using the second phenology based model (similar to one described at step 308) and the local domain knowledge, a plurality of weather factors indices. The factors stated are used to identify and eliminate low growth-no growth time duration from the cover crop duration and identifying a snow duration to eliminate period of dormancy within the cover crop duration due to presence of snow. To estimate the precise duration of cover crop excluding the snow cover, dormant period, and grass/weeds if any, the satellite based indicators such as Normalized Difference Snow Index (NDSI), data from SAR sensors and data from on-field sensors such as air temperature associated with that farm (Accumulated Growing Degree Days) to decide on the dormant period, etc. Finally, the duration of cover crop is estimated in days.

At step 318 of the method 300, the one or more hardware processors 204 determine density and height of the type of cover crop from a second time series data acquired for the estimated cover crop duration from a synthetic aperture radar satellite data. Density of cover crop can be estimated using image processing based algorithm by making use of indices such as NDVI, Leaf Area Index (LAI) etc. Any well-known ML based regression models can be used which takes input as NDVI, LAI and provides density of the crop (cover crop) present in the field.

At step 320 of the method 300, the one or more hardware processors 204 generate the Integrated Cover Crop Index (ICCI) for the land of interest based on the type of the cover crop, the density and height of cover crop, the cover crop duration, and the type of cover crop, wherein the ICCI quantifies a cover crop effort put into the land of interest on a predefined ascending scale.

FIG. 4 depicts a use case example of cover crop identification, in accordance with some embodiments of the present disclosure.

**Detection of type of cover crop:** The time-series satellite data available from Optical satellites such as Sentinel-2 and Synthetic Aperture Radar sensors such as Sentinel-1 is used. Region / Geography specific domain knowledge about the type of main crops, cover crops, grass (weeds) is used. The regional information can be obtained from research papers, government websites, local agricultural universities, etc. First analysis step involves separating between vegetation, fallow and snow period using the threshold based approach. Time series of Normalized Difference Vegetation Index (NDVI) is used for separating vegetation and fallow periods for the analysis time-window. Additionally Normalized Difference Snow Index (NDSI) is used for separating the snow vs. no-snow period. This is well known approach.

*For example,*

*NDVI threshold of 0.25 is used for separating vegetation and fallow period.*

*Time-period or days with*
*NDVI > 0.25 is categorized as vegetation period and*
*NDVI < 0.25 is used as fallow period.*

*Similarly, Snow vs. No-Snow period is estimated based on NDSI threshold.*

*Time-period or days with*
*NDSI > 0.3 is counted as snow-period and*
*NDSI < 0.3 is counted as No-Snow*

(Please note: NDVI and NDSI are vegetation indices merely used to show the example. Any other indices can be used such as Leaf Area Index (LAI), Soil Adjusted Vegetation Index (SAVI), Enhanced Vegetation Index (EVI) in addition to NDVI for vegetation vs. fallow separation. Similarly, for snow cover period estimation Synthetic Aperture Radar (SAR) backscatter data in VV and VH polarization is used in addition to NDSI. Moreover, the threshold values might slightly change depending on the region. For example, NDSI threshold might be 0.4 for US region and 0.3 for Europe region)

After the basic classification of NDVI time series into vegetation, fallow/soil, and snow cover period. Next step is the estimation of main crop and its phenological components such as start of the season and end of the season. This is needed because cover crop is grown (if any) after the harvest of main crop. For detection of main crop and its phenological components, time-series data of NDVI and VH polarization is used during the vegetation period.

$$MainCrop(SoS) = f\{NDVI_{t1}, NDVI_{t2}, ....NDVI_{tn}, VH_{t1}, VH_{t2}, ....,VH_{tn}\}$$

$$MainCrop(EoS) = f\{MainCrop(SoS), NDVI_{t1}, NDVI_{t2}, ... .NDVI_{tn}, VH_{t1}, VH_{t2}, ...., VH_{tn}\}$$

*Where,*

*MainCrop(SoS) is the start of the season (Date/DoY) of the main crop*
*MainCrop(EoS) is the end of the season (Date/DoY) of the main crop*
$NDVI_{t1}, NDVI_{t2}, ... .NDVI_{tn}$ *represents NDVI time-series from time t1 to tn*
$VH_{t1}, VH_{t2}, ...., VH_{tn}$ *represents VH time-series from time t1 to tn*

Assuming that the main crop was Wheat, using the time-series data, the model detected the Start of the Season on 4th April and end of the season on 7th Sept of the same year.

Next step involves separation of grass/weed during the vegetation period after the End of the Season of main crop. This would be done based on the maximum NDVI value of the vegetation period after the end of the season of main crop

$$Grass/weed\ Presence = f\{MainCrop(EoS), NDVImax\}$$

*Where,*

*MainCrop(EOS) is the end of season (date/DoY) of the main crop.*
*NDVImax is the maximum NDVI for the vegetation period (if any) after the end of season of main crop.*

Next step involves training the ML/DL based model on the remaining time-series of vegetation period (if the grass/weed has not been detected). This is quite crucial to achieve the best precision of the models as some main crops will grow till November and hence simply applying the traditional machine learning model or not considering the influence of grass or weeds leads to error and false classification. Hence separation of main crop period is needed.

For detection of cover crop type ML/DL based model is trained considering the data temporal data on indices such as NDVI, EVI, LAI and temporal backscatter in VV and VH polarization.

$$CoverCrop = f\{MainCrop(EoS), NDVI, EVI, LAI, VV, VH\}$$

*Where,*

> *MainCrop(EoS) is the end of the season (Date/DoY) of the main crop.*
> *NDVI, EVI, LAI, VV, VH are Normalized Difference Vegetation Index,*
> *Enhanced Vegetation Index, Leaf Area Index, Backscatter in VV, Backscatter in VH polarization.*
> *We basically plan to consider the time-series of those indices after the end of season of main crop.*

**Estimation of duration of cover crop:** The time series satellite data from optical and SAR satellites such as Sentinel-2 and Sentinel-1, respectively is used. Additionally, the weather variables such as air temperature, land surface temperature are obtained from automatic weather station, on-field sensors, or satellite sensors. The domain and regional knowledge about the crop and it's resistance to the low temperatures which is available from agricultural universities and research publications.

Since type of cover crop is already detected, now the first step is to detect the start and end of season of the detected cover crop. This is detected using the phenology based algorithm which works on the principle of detecting local minima and local maxima and then iteratively reducing the minima to one before the peak (local maxima) and other after the peak. Local minima detected before the peak is called start of the season and local minima detected after the peak is called as end of the season of the cover crop. Further season length is calculated based on difference between end of the season and start of the season.

$$CoverCrop(SoS) = f\{NDVI_{t1}, NDVI_{t2}, ....NDVI_{tn}, VH_{t1}, VH_{t2}, ...., VH_{tn}\}$$

$CoverCrop(EoS) = f\{MainCrop(SoS), NDVI_{t1}, NDVI_{t2}, ....NDVI_{tn}, VH_{t1}, VH_{t2}, ...,VH_{tn}\}$

*Where,*

> *CoverCrop(SoS) is the start of the season (Date/DoY) of the cover crop*
> *CoverCrop(EoS) is the end of the season (Date/DoY) of the cover crop*
> $NDVI_{t1}, NDVI_{t2},...,NDVI_{tn}$ *represents NDVI time-series for the period when cover crop was present*
> $VH_{t1}, VHt_{2},...,VH_{tn}$ *represents VH time-series for the period when cover crop was present*

$$LoS = CoverCrop(EoS) - CoverCrop(SoS)$$

> *Where,*
> *LoS is the length of season without considering the impact of snow cover and extremely low temperatures*
> *Let's assume that CoverCrop(SoS) is detected on 15 Oct. 2021 and CoverCrop(EoS) is detected at 15 March 2022, then LS would be 151 days*

Further snow cover (if any) during the cover crop period (in days) is estimated using the indices such as NDSI and backscatter in VV and VH polarization

$$SnowCoverDur = f\{CoverCrop(SoS), CoverCrop(SoS), NDSI, VV, VH\}$$

*Where,*

> *SnowCoverDur is the period in days for which snow was present during the cover crop period.*
> *NDSI is the Normalized Difference Snow Index*

Further, Accumulated Growing Degree Days are calculated for cover crop since the start of season of cover crop using the data from air temperature and/or land surface temperature available either from on-field sensors or satellite sensors.

$CoverCropAGDD = f\{CoverCrop(SoS), CoverCrop(EoS), TempAir, TempLand\}$

> *CoverCropAGDD is the accumulated growing degree days. This is estimated on daily basis.*
> *TempAir is the air temperature measured by sensors on Agro-meteorological station*

*TempLand is the land surface temperature calculated using thermal infa-red region of the satellite observations*

Finally, duration of cover crop is estimated considering the snow duration and impact of temperature in the form of CoverCropAGDD

$$CoverCropDur = f\{LoS, SnowCoverDur, CoverCropAGDD, NDVI_{fl}\}$$

*CoverCropDur is the precise duration of cover crop*
*$NDVI_{fl}$ is the temporal NDVI fluctuation during low temperature period*

**Special cases**

*Case 1*
*In certain cases, due to extremely low temperatures and/or snow cover crop will not be able to sustain, in such cases*

$$CoverCropDur = StartTippingPoint - CoverCrop(SoS)$$

*Where, StartTippingPoint is the point or day at which cover crop became dormant due to extremely low temperatures or snow cover*

*Case 2*
*When the snow thaws or temperatures increase, farmers might again plant cover crop (during the period between snow thaw and next main crop season), in such cases, there would be two cover crops, one before the snow/low temperatures period and one after the snow cover melts.*

*$CoverCropDur = f\{LoS_1, SnowCoverDur_1, CoverCropAGDD_1, LoS_2, SnowCoverDur_2, CoverCropAGDD_2\}$*

*Where,*

    *$LoS_1$, $SnowCoverDur_1$, $CoverCropAGDD_1$ are the parameters of first cover crop (before snow cover)*
    *$LoS_2$, $SnowCoverDur_2$, $CoverCropAGDD_2$ are the parameters of second cover crop (after snow cover)*

**Estimation of Integrated Cover Crop Index (ICCI):** The data on type of cover crop detected (it may be fallow, grass/weeds, specific cover crop such as barley, rye, oats etc.) and the duration of cover crop (in days) is used for estimating the integrated cover crop index ICCI).
In addition to the type and duration of cover crop, density (fractional vegetation cover) and height of cover crop is estimated as it will impact the amount of C and N emitted from the soil.

$$CoverCropDensity = f\{CoverCrop, NDVI_t, LAI_t\}$$

*Where,*

*CoverCropDensity is the percentage of land covered by the cover crop vegetation*
*$NDVI_t$ and $LAI_t$ are the Normalized Difference Vegetation Index and Leaf Area Index at time t for CoverCropDensity*

$$CoverCropHeight = f\{CoverCrop, VV_t, VH_t\}$$

*Where,*
*CoverCropHeight is the height of cover crop in cm*
*$VV_t$ and $VH_t$ are the backscatter in VV and VHpolarization at time t for CoverCropHeight*
*Finally Integrated Cover Crop Index (ICCI) is calculated using*
*ICCI = f{CoverCrop, CoverCropDur, CoverCropDensity, CoverCropHeight}*

This score can have values between 0 and 100. ICCI value of 0 will come when there is no cover crop grown at all, whereas ICCI value of 100 is possible for cover crop with optimal density and height and have been grown for the entire duration between two main crop seasons. Farmers is incentivized based on the ICCI value (Table 1).

Table 1. Example table of field wise cover crop and ICCI

| SN | Field ID | Presence of cover crop | Duration of cover crop (in days) | ICCI value | Incentives |
|---|---|---|---|---|---|
| 1 | Field 1 | Present | 60 | 75 | High |
| 2 | Field 2 | Absent | 0 | 0 | No |
| 3 | Field 3 | Present | 20 | 30 | Low |
| 4 | Field 4 | Present | 80 | 90 | High |
| 5 | Field 5 | Absent | 0 | 0 | No |

The written description describes the subject matter herein to enable any person skilled in the art to make and use the embodiments. The scope of the subject matter embodiments is defined by the claims

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (300) for estimating cover crop duration, the processor implemented method (300) comprising:

receiving (302) by one or more hardware processors (204), a first time series data across a crop year for a land of interest, sourced from an optical satellite data;

separating (304) by the one or more hardware processors (204), the first time series data into a vegetation and fallow period based on a first Normalized Difference Vegetation Index, NDVI, threshold to select the first time series data associated with the vegetation period;

determining (306) by the one or more hardware processors (204), a main crop cultivated in the land of interest using a trained first Machine Learning, ML, classification model by analyzing the first time series data associated with the vegetation period;

determining (308) by the one or more hardware processors (204), the main crop duration within the crop year using a first phenology based model and local domain knowledge;

discarding (310) by the one or more hardware processors (204), partial time series data associated with the main crop duration from the first time series data associated with the vegetation period to obtain a cover crop time series data within the crop year;

comparing (312) by the one or more hardware processors (204), a maximum NDVI obtained for the cover crop time series data with a second NDVI threshold to segregate the cover crop time series data as a non-crop vegetation data if the maximum NDVI is equal to or lower than the second NDVI threshold and a cover crop vegetation data if the maximum NDVI is greater than the second NDVI threshold;

determining (314) by the one or more hardware processors (204), a type of cover crop by processing the cover crop vegetation data using a second ML classification model;

estimating (316) by the one or more hardware processors (204), a cover crop duration for the type of cover crop by analyzing the cover crop vegetation data using a second phenology based model and the local domain knowledge, a plurality of weather factors indices used to identify and eliminate low growth-no growth time duration from the cover crop duration and identifying a snow duration to eliminate dormant period within the cover crop duration due to presence of snow, wherein the presence of snow, the snow duration, the dormant period due to low temperatures, and at least one of grass and weeds are derived from Normalized Difference Snow Index, NDSI; a synthetic aperture radar, SAR, satellite data in vertical-vertical, VV, and vertical-horizontal, VH, polarization; and data from one or more on-field sensors;

determining (318) by the one or more hardware processors (204), density, and height of the type of cover crop from a second time series data acquired for the estimated cover crop duration from the SAR data; and

generating (320) by the one or more hardware processors (204), an Integrated Cover Crop Index, ICCI, for the land of interest based on the type of the cover crop, the density and height of the cover crop, the cover crop duration, and the type of cover crop, wherein the ICCI quantifies a cover crop effort put into the land of interest on a predefined ascending scale.

2. The processor implemented method (300) of claim 1, wherein the land of interest corresponds to a Geo-tagged field boundary, located via applications running on field devices and wherein the local domain knowledge, weather indices, snow period data and vegetation index associated with the land of interest is obtained prior to determining the type of cover crop, obtaining the cover crop duration and the ICCI.

3. The processor implemented method (300) of claim 1, wherein a score for the ICCI has values between 0 and 100, wherein a value of 0 indicates the cover crop has not been grown in the land of interest and the value of 100 indicates the cover crop has optimal density and height and has been grown for the entire duration between two main crop seasons in the land of interest.

4. A system (102) for estimating cover crop duration, the system (102) comprising:

a memory (202) storing instructions;
one or more Input/Output, I/O, interfaces (206); and
one or more hardware processors (204) coupled to the memory (202) via the one or more I/O interfaces (206), wherein the one or more hardware processors (204) are configured by the instructions to:

receive a first time series data across a crop year for a land of interest, sourced from an optical satellite data;
separate the first time series data into a vegetation and fallow period based on a first Normalized Difference Vegetation Index, NDVI, threshold to select the first time series data associated with the vegetation period;
determine a main crop cultivated in the land of interest using a trained first Machine Learning, ML, classification model by analyzing the first time series data associated with the vegetation period;
determine the main crop duration within the crop year using a first phenology based model and local domain knowledge;

discard partial time series data associated with the main crop duration from the first time series data associated with the vegetation period to obtain a cover crop time series data within the crop year;

compare a maximum NDVI obtained for the cover crop time series data with a second NDVI threshold to segregate the cover crop time series data as a non-crop vegetation data if the maximum NDVI is equal to or lower than the second NDVI threshold and a cover crop vegetation data if the maximum NDVI is greater than the second NDVI threshold;

determine a type of cover crop by processing the cover crop vegetation data using a second ML classification model;

estimate a cover crop duration for the type of cover crop by analyzing the cover crop vegetation data using a second phenology based model and the local domain knowledge, a plurality of weather factors indices used to identify and eliminate low growth-no growth time duration from the cover crop duration and identifying a snow duration to eliminate dormant period within the cover crop duration due to presence of snow, wherein the presence of snow, the snow duration, the dormant period due to low temperatures, and at least one of grass and weeds are derived from Normalized Difference Snow Index, NDSI; a synthetic aperture radar, SAR, satellite data in vertical-vertical, VV, and vertical-horizontal, VH, polarization; and data from one or more on-field sensors;

determine density and height of the type of cover crop from a second time series data acquired for the estimated cover crop duration from the SAR data; and

generate an Integrated Cover Crop Index, ICCI, for the land of interest based on the type of the cover crop, the density and height of the cover crop, the cover crop duration, and the type of cover crop, wherein the ICCI quantifies a cover crop effort put into the land of interest on a predefined ascending scale.

5. The system of claim 4, wherein the land of interest corresponds to a Geo-tagged field boundary, located via applications running on field devices and wherein the local domain knowledge, weather indices, snow period data and vegetation index associated with the land of interest is obtained prior to determining the type of cover crop, obtaining the cover crop duration and the ICCI.

6. The system of claim 4, wherein a score for the ICCI has values between 0 and 100, wherein a value of 0 indicates the cover crop has not been grown in the land of interest and the value of 100 indicates the cover crop has optimal density and height and has been grown for the entire duration between two main crop seasons in the land of interest.

7. One or more non-transitory machine-readable information storage mediums (202) comprising one or more instructions which when executed by one or more hardware processors (204) cause:

receiving a first time series data across a crop year for a land of interest, sourced from an optical satellite data;

separating the first time series data into a vegetation and fallow period based on a first Normalized Difference Vegetation Index, NDVI, threshold to select the first time series data associated with the vegetation period;

determining a main crop cultivated in the land of interest using a trained first Machine Learning, ML, classification model by analyzing the first time series data associated with the vegetation period;

determining the main crop duration within the crop year using a first phenology based model and local domain knowledge;

discarding partial time series data associated with the main crop duration from the first time series data associated with the vegetation period to obtain a cover crop time series data within the crop year;

comparing a maximum NDVI obtained for the cover crop time series data with a second NDVI threshold to segregate the cover crop time series data as a non-crop vegetation data if the maximum NDVI is equal to or lower than the second NDVI threshold and a cover crop vegetation data if the maximum NDVI is greater than the second NDVI threshold;

determining a type of cover crop by processing the cover crop vegetation data using a second ML classification model;

estimating a cover crop duration for the type of cover crop by analyzing the cover crop vegetation data using a second phenology based model and the local domain knowledge, a plurality of weather factors indices used to identify and eliminate low growth-no growth time duration from the cover crop duration and identifying a snow duration to eliminate dormant period within the cover crop duration due to presence of snow, wherein the presence of snow, the snow duration, the dormant period due to low temperatures, and at least one of grass and weeds are derived from Normalized Difference Snow Index, NDSI; a synthetic aperture radar, SAR, satellite data in vertical-vertical, VV, and vertical-horizontal, VH, polarization; and data from one or more on-field sensors;

determining density, and height of the type of cover crop from a second time series data acquired for the estimated cover crop duration from the SAR data; and

generating an Integrated Cover Crop Index, ICCI, for the land of interest based on the type of the cover crop, the density and height of the cover crop, the cover crop duration, and the type of cover crop, wherein the ICCI quantifies a cover crop effort put into the land of interest on a predefined ascending scale.

8.  The one or more non-transitory machine-readable information storage mediums (202) of claim 7, wherein the land of interest corresponds to a Geo-tagged field boundary, located via applications running on field devices and wherein the local domain knowledge, weather indices, snow period data and vegetation index associated with the land of interest is obtained prior to determining the type of cover crop, obtaining the cover crop duration and the ICCI.

9.  The one or more non-transitory machine-readable information storage mediums (202) of claim 7, wherein a score for the ICCI has values between 0 and 100, wherein a value of 0 indicates the cover crop has not been grown in the land of interest and the value of 100 indicates the cover crop has optimal density and height and has been grown for the entire duration between two main crop seasons in the land of interest.

**Patentansprüche**

1.  Prozessorimplementiertes Verfahren (300) zum Schätzen der Abdeckungserntedauer, wobei das prozessorimplementierte Verfahren (300) Folgendes umfasst:

    Empfangen (302), durch einen oder mehrere Hardwareprozessoren (204), von ersten Zeitreihendaten über ein Erntejahr für ein interessierendes Land, die von optischen Satellitendaten stammen;
    Trennen (304), durch den einen oder die mehreren Hardwareprozessoren (204), der ersten Zeitreihendaten in einen Vegetations- und Fruchtzeitraum auf der Basis eines ersten Schwellenwerts des Normalized Difference Vegetation Index, NDVI, um die ersten Zeitreihendaten auszuwählen, die mit dem Vegetationszeitraum assoziiert sind;
    Bestimmen (306), durch den einen oder die mehreren Hardwareprozessoren (204), einer Haupternte, die in dem interessierenden Land kultiviert wird, unter Verwendung eines trainierten ersten Maschinenlernklassifikationsmodells, ML-Klassifikationsmodells, durch Analysieren der ersten Zeitreihendaten, die mit dem Vegetationszeitraum assoziiert sind;
    Bestimmen (308), durch den einen oder die mehreren Hardwareprozessoren (204), der Haupterntedauer innerhalb des Erntejahrs unter Verwendung eines ersten phenologiebasierten Modells und lokalen Domänenwissens;
    Verwerfen (310), durch den einen oder die mehreren Hardwareprozessoren (204), von Teilzeitreihendaten, die mit der Haupterntedauer assoziiert sind, aus den ersten Zeitreihendaten, die mit dem Vegetationszeitraum assoziiert sind, um Abdeckungserntezeitreihendaten innerhalb des Erntejahrs zu erhalten;
    Vergleichen (312), durch den einen oder die mehreren Hardwareprozessoren (204), eines maximalen NDVI, der für die Abdeckungserntezeitreihendaten erhalten wird, mit einem zweiten NDVI-Schwellenwert, um die Abdeckungserntezeitreihendaten als Nicht-Erntepflanzendaten zu trennen, wenn der maximale NDVI gleich oder niedriger als der zweite NDVI-Schwellenwert ist, und Abdeckungserntepflanzendaten, wenn der maximale NDVI größer als der zweite NDVI-Schwellenwert ist;
    Bestimmen (314), durch den einen oder die mehreren Hardwareprozessoren (204), eines Typs von Abdeckungsernte durch Verarbeiten der Abdeckungserntepflanzendaten unter Verwendung eines zweiten ML-Klassifikationsmodells;
    Schätzen (316), durch den einen oder die mehreren Hardwareprozessoren (204), einer Abdeckungserntedauer für den Typ von Abdeckungsernte durch Analysieren der Abdeckungserntepflanzendaten unter Verwendung eines zweiten phenologiebasierten Modells und des lokalen Domänenwissens, einer Mehrzahl von Wetterfaktorindizes, die verwendet werden, um eine Zeitdauer mit geringem Wachstum und keinem Wachstum aus der Abdeckungserntedauer zu identifizieren und zu eliminieren, und Identifizieren einer Schneedauer, um einen Ruhezeitraum innerhalb der Abdeckungserntedauer aufgrund des Vorhandenseins von Schnee zu eliminieren, wobei das Vorhandensein von Schnee, die Schneedauer, der Ruhezeitraum aufgrund niedriger Temperaturen und mindestens eines von Gras und Unkräutern von einem Normalized Difference Snow Index, NDSI, abgeleitet sind; eines Satellitenradars mit synthetischer Apertur, SAR, in Vertikal-Vertikal-, VV-, und Vertikal-Horizontal-, VH-, Polarisation; und Daten von einem oder mehreren Feldsensoren;
    Bestimmen (318), durch den einen oder die mehreren Hardwareprozessoren (204), der Dichte und Höhe des Typs von Abdeckungsernte aus zweiten Zeitreihendaten, die für die geschätzte Abdeckungserntedauer aus den SAR-Daten erfasst werden; und
    Erzeugen (320), durch den einen oder die mehreren Hardwareprozessoren (204), eines integrierten Abdeckungsernteindex, ICCI, für das Land von Interesse basierend auf dem Typ der Abdeckungsernte, der Dichte und Höhe der Abdeckungsernte, der Abdeckungserntedauer und dem Typ von Abdeckungsernte, wobei der ICCI eine Abdeckungsernteanstrengung quantifiziert, die auf einer vordefinierten aufsteigenden Skala in das Land von Interesse eingebracht wird.

2. Prozessorimplementiertes Verfahren (300) nach Anspruch 1, wobei das Land von Interesse einer geomarkierten Feldgrenze entspricht, die sich über Anwendungen befindet, die auf Feldgeräten laufen, und wobei das lokale Domänenwissen, die Wetterindizes, die Schneeperiodendaten und der Pflanzenindex, die dem Land von Interesse zugeordnet sind, vor dem Bestimmen des Typs von Abdeckungsernte, dem Erhalten der Abdeckungserntedauer und des ICCI erhalten werden.

3. Prozessorimplementiertes Verfahren (300) nach Anspruch 1, wobei eine Punktzahl für den ICCI Werte zwischen 0 und 100 aufweist, wobei ein Wert von 0 angibt, dass die Abdeckungsernte nicht in dem Land von Interesse gewachsen ist, und der Wert von 100 angibt, dass die Abdeckungsernte eine optimale Dichte und Höhe aufweist und für die gesamte Dauer zwischen zwei Haupterntejahreszeiten in dem Land von Interesse gewachsen ist.

4. System (102) zum Schätzen der Abdeckungserntedauer, wobei das System (102) Folgendes umfasst:

   einen Speicher (202), der Anweisungen speichert;
   eine oder mehrere Eingabe/Ausgabe-, E/A-, Schnittstellen (206); und
   einen oder mehrere Hardwareprozessoren (204), die über die eine oder die mehreren E/A-Schnittstellen (206) mit dem Speicher (202) gekoppelt sind,
   wobei der eine oder die mehreren Hardwareprozessoren (204) durch die Anweisungen konfiguriert sind zum:

   Empfangen von ersten Zeitreihendaten über ein Erntejahr für ein interessierendes Land, die von optischen Satellitendaten stammen;
   Trennen der ersten Zeitreihendaten in einen Vegetations- und Fruchtzeitraum auf der Basis eines ersten Schwellenwerts des Normalized Difference Vegetation Index, NDVI, um die ersten Zeitreihendaten auszuwählen, die mit dem Vegetationszeitraum assoziiert sind;
   Bestimmen einer Haupternte, die in dem interessierenden Land kultiviert wird, unter Verwendung eines trainierten ersten Maschinenlernklassifikationsmodells, ML-Klassifikationsmodells, durch Analysieren der ersten Zeitreihendaten, die mit dem Vegetationszeitraum assoziiert sind;
   Bestimmen der Haupterntedauer innerhalb des Erntejahrs unter Verwendung eines ersten phenologiebasierten Modells und lokalen Domänenwissens;
   Verwerfen von Teilzeitreihendaten, die mit der Haupterntedauer assoziiert sind, aus den ersten Zeitreihendaten, die mit dem Vegetationszeitraum assoziiert sind, um Abdeckungserntezeitreihendaten innerhalb des Erntejahrs zu erhalten;
   Vergleichen eines maximalen NDVI, der für die Abdeckungserntezeitreihendaten erhalten wird, mit einem zweiten NDVI-Schwellenwert, um die Abdeckungserntezeitreihendaten als Nicht-Erntepflanzendaten zu trennen, wenn der maximale NDVI gleich oder niedriger als der zweite NDVI-Schwellenwert ist, und Abdeckungserntepflanzendaten, wenn der maximale NDVI größer als der zweite NDVI-Schwellenwert ist;
   Bestimmen eines Typs von Abdeckungsernte durch Verarbeiten der Abdeckungserntepflanzendaten unter Verwendung eines zweiten ML-Klassifikationsmodells;
   Schätzen einer Abdeckungserntedauer für den Typ von Abdeckungsernte durch Analysieren der Abdeckungserntepflanzendaten unter Verwendung eines zweiten phenologiebasierten Modells und des lokalen Domänenwissens, einer Mehrzahl von Wetterfaktorindizes, die verwendet werden, um eine Zeitdauer mit geringem Wachstum und keinem Wachstum aus der Abdeckungserntedauer zu identifizieren und zu eliminieren, und Identifizieren einer Schneedauer, um einen Ruhezeitraum innerhalb der Abdeckungserntedauer aufgrund des Vorhandenseins von Schnee zu eliminieren, wobei das Vorhandensein von Schnee, die Schneedauer, der Ruhezeitraum aufgrund niedriger Temperaturen und mindestens eines von Gras und Unkräutern von einem Normalized Difference Snow Index, NDSI, abgeleitet sind; eines Satellitenradars mit synthetischer Apertur, SAR, in Vertikal-Vertikal-, VV-, und Vertikal-Horizontal-, VH-, Polarisation; und Daten von einem oder mehreren Feldsensoren;
   Bestimmen der Dichte und Höhe des Typs von Abdeckungsernte aus zweiten Zeitreihendaten, die für die geschätzte Abdeckungserntedauer aus den SAR-Daten erfasst werden; und
   Erzeugen eines integrierten Abdeckungsernteindex, ICCI, für das Land von Interesse basierend auf dem Typ der Abdeckungsernte, der Dichte und Höhe der Abdeckungsernte, der Abdeckungserntedauer und dem Typ von Abdeckungsernte, wobei der ICCI eine Abdeckungsernteanstrengung quantifiziert, die auf einer vordefinierten aufsteigenden Skala in das Land von Interesse eingebracht wird.

5. System nach Anspruch 4, wobei das Land von Interesse einer geomarkierten Feldgrenze entspricht, die sich über Anwendungen befindet, die auf Feldgeräten laufen, und wobei das lokale Domänenwissen, die Wetterindizes, die Schneeperiodendaten und der Pflanzenindex, die dem Land von Interesse zugeordnet sind, vor dem Bestimmen des Typs von Abdeckungsernte, dem Erhalten der Abdeckungserntedauer und des ICCI erhalten werden.

6. System nach Anspruch 4, wobei eine Punktzahl für den ICCI Werte zwischen 0 und 100 aufweist, wobei ein Wert von 0 angibt, dass die Abdeckungsernte nicht in dem Land von Interesse gewachsen ist, und der Wert von 100 angibt, dass die Abdeckungsernte eine optimale Dichte und Höhe aufweist und für die gesamte Dauer zwischen zwei Haupterntejahreszeiten in dem Land von Interesse gewachsen ist.

7. Ein oder mehrere nichtflüchtige maschinenlesbare Informationsspeichermedien (202), die eine oder mehrere Anweisungen umfassen, die bei Ausführung durch einen oder mehrere Hardwareprozessoren (204) Folgendes bewirken:

Empfangen von ersten Zeitreihendaten über ein Erntejahr für ein interessierendes Land, die von optischen Satellitendaten stammen;
Trennen der ersten Zeitreihendaten in einen Vegetations- und Fruchtzeitraum auf der Basis eines ersten Schwellenwerts des Normalized Difference Vegetation Index, NDVI, um die ersten Zeitreihendaten auszuwählen, die mit dem Vegetationszeitraum assoziiert sind;
Bestimmen einer Haupternte, die in dem interessierenden Land kultiviert wird, unter Verwendung eines trainierten ersten Maschinenlernklassifikationsmodells, ML-Klassifikationsmodells, durch Analysieren der ersten Zeitreihendaten, die mit dem Vegetationszeitraum assoziiert sind;
Bestimmen der Haupterntedauer innerhalb des Erntejahrs unter Verwendung eines ersten phenologiebasierten Modells und lokalen Domänenwissens;
Verwerfen von Teilzeitreihendaten, die mit der Haupterntedauer assoziiert sind, aus den ersten Zeitreihendaten, die mit dem Vegetationszeitraum assoziiert sind, um Abdeckungserntezeitreihendaten innerhalb des Erntejahrs zu erhalten;
Vergleichen eines maximalen NDVI, der für die Abdeckungserntezeitreihendaten erhalten wird, mit einem zweiten NDVI-Schwellenwert, um die Abdeckungserntezeitreihendaten als Nicht-Erntepflanzendaten zu trennen, wenn der maximale NDVI gleich oder niedriger als der zweite NDVI-Schwellenwert ist, und Abdeckungserntepflanzendaten, wenn der maximale NDVI größer als der zweite NDVI-Schwellenwert ist;
Bestimmen eines Typs von Abdeckungsernte durch Verarbeiten der Abdeckungserntepflanzendaten unter Verwendung eines zweiten ML-Klassifikationsmodells;
Schätzen einer Abdeckungserntedauer für den Typ von Abdeckungsernte durch Analysieren der Abdeckungserntepflanzendaten unter Verwendung eines zweiten phenologiebasierten Modells und des lokalen Domänenwissens, einer Mehrzahl von Wetterfaktorindizes, die verwendet werden, um eine Zeitdauer mit geringem Wachstum und keinem Wachstum aus der Abdeckungserntedauer zu identifizieren und zu eliminieren, und Identifizieren einer Schneedauer, um einen Ruhezeitraum innerhalb der Abdeckungserntedauer aufgrund des Vorhandenseins von Schnee zu eliminieren, wobei das Vorhandensein von Schnee, die Schneedauer, der Ruhezeitraum aufgrund niedriger Temperaturen und mindestens eines von Gras und Unkräutern von einem Normalized Difference Snow Index, NDSI, abgeleitet sind; eines Satellitenradars mit synthetischer Apertur, SAR, in Vertikal-Vertikal-, VV-, und Vertikal-Horizontal-, VH-, Polarisation; und Daten von einem oder mehreren Feldsensoren;
Bestimmen der Dichte und Höhe des Typs von Abdeckungsernte aus zweiten Zeitreihendaten, die für die geschätzte Abdeckungserntedauer aus den SAR-Daten erfasst werden; und
Erzeugen eines integrierten Abdeckungsernteindex, ICCI, für das Land von Interesse basierend auf dem Typ der Abdeckungsernte, der Dichte und Höhe der Abdeckungsernte, der Abdeckungserntedauer und dem Typ von Abdeckungsernte, wobei der ICCI eine Abdeckungsernteanstrengung quantifiziert, die auf einer vordefinierten aufsteigenden Skala in das Land von Interesse eingebracht wird.

8. Ein oder mehrere nichtflüchtige maschinenlesbare Informationsspeichermedien (202) nach Anspruch 7, wobei das Land von Interesse einer geomarkierten Feldgrenze entspricht, die sich über Anwendungen befindet, die auf Feldgeräten laufen, und wobei das lokale Domänenwissen, die Wetterindizes, die Schneeperiodendaten und der Pflanzenindex, die dem Land von Interesse zugeordnet sind, vor dem Bestimmen des Typs von Abdeckungsernte, dem Erhalten der Abdeckungserntedauer und des ICCI erhalten werden.

**9.** Ein oder mehrere nichtflüchtige maschinenlesbare Informationsspeichermedien (202) nach Anspruch 7, wobei eine Punktzahl für den ICCI Werte zwischen 0 und 100 aufweist, wobei ein Wert von 0 angibt, dass die Abdeckungsernte nicht in dem Land von Interesse gewachsen ist, und der Wert von 100 angibt, dass die Abdeckungsernte eine optimale Dichte und Höhe aufweist und für die gesamte Dauer zwischen zwei Haupterntejahreszeiten in dem Land von Interesse gewachsen ist.

## Revendications

**1.** Procédé mis en œuvre par processeur (300) pour estimer une durée de culture de couverture, le procédé mis en œuvre par processeur (300) comprenant :

la réception (302), par un ou plusieurs processeurs matériels (204), de premières données de série temporelle sur une année de culture pour une terre d'intérêt, provenant de données de satellite optique ;

la séparation (304), par les un ou plusieurs processeurs matériels (204), des premières données de série temporelle en une période de végétation et de suif sur la base d'un premier seuil d'indice de végétation à différence normalisée, NDVI, pour sélectionner les premières données de série temporelle associées à la période de végétation ;

la détermination (306), par les un ou plusieurs processeurs matériels (204), d'une culture principale cultivée dans la terre d'intérêt en utilisant un premier modèle de classification d'apprentissage machine, ML, entraîné en analysant les premières données de série temporelle associées à la période de végétation ;

la détermination (308), par les un ou plusieurs processeurs matériels (204), de la durée de culture principale dans l'année de culture en utilisant un premier modèle basé sur la phénologie et des connaissances du domaine local ;

le rejet (310), par les un ou plusieurs processeurs matériels (204), de données de série temporelle partielles associées à la durée de culture principale à partir des premières données de série temporelle associées à la période de végétation pour obtenir des données de série temporelle de culture de couverture dans l'année de culture ;

la comparaison (312), par les un ou plusieurs processeurs matériels (204), d'un NDVI maximum obtenu pour les données de série temporelle de culture de couverture avec un second seuil de NDVI pour séparer les données de série temporelle de culture de couverture en tant que données de végétation non de culture si le NDVI maximum est égal ou inférieur au second seuil de NDVI et des données de végétation de culture de couverture si le NDVI maximum est supérieur au second seuil de NDVI ;

la détermination (314), par les un ou plusieurs processeurs matériels (204), d'un type de culture de couverture en traitant les données de végétation de culture de couverture en utilisant un second modèle de classification ML ;

l'estimation (316), par les un ou plusieurs processeurs matériels (204), d'une durée de culture de couverture pour le type de culture de couverture en analysant les données de végétation de culture de couverture en utilisant un second modèle basé sur la phénologie et les connaissances du domaine local, une pluralité d'indices de facteurs météorologiques utilisés pour identifier et éliminer une durée de croissance faible-nulle à partir de la durée de culture de couverture et identifier une durée d'enneigement pour éliminer une période de sommeil dans la durée de culture de couverture en raison de la présence de neige, dans lequel la présence de neige, la durée d'enneigement, la période de sommeil en raison de basses températures, et au moins l'une parmi l'herbe et les mauvaises herbes sont dérivées d'un indice de neige à différence normalisée, NDSI ; des données de satellite de radar à ouverture synthétique, SAR, en polarisation verticale-verticale, VV, et verticale-horizontale, VH ; et des données provenant d'un ou plusieurs capteurs sur site ;

la détermination (318), par les un ou plusieurs processeurs matériels (204), de la densité et de la hauteur du type de culture de couverture à partir de secondes données de série temporelle acquises pour la durée de culture de couverture estimée à partir des données SAR ; et

la génération (320), par les un ou plusieurs processeurs matériels (204), d'un indice de culture de couverture intégré, ICCI, pour la terre d'intérêt sur la base du type de culture de couverture, de la densité et de la hauteur de la culture de couverture, de la durée de culture de couverture, et du type de culture de couverture, dans lequel l'ICCI quantifie un effort de culture de couverture consacré à la terre d'intérêt sur une échelle ascendante prédéfinie.

**2.** Procédé mis en œuvre par processeur (300) selon la revendication 1, dans lequel la terre d'intérêt correspond à une limite de champ géomarquée, localisée par l'intermédiaire d'applications s'exécutant sur des dispositifs de champ et dans lequel les connaissances du domaine local, les indices météorologiques, les données de période d'enneigement et l'indice de végétation associés à la terre d'intérêt sont obtenus avant la détermination du type de culture de couverture, l'obtention de la durée de culture de couverture et de l'ICCI.

**3.** Procédé mis en œuvre par processeur (300) selon la revendication 1, dans lequel un score pour l'ICCI a des valeurs entre 0 et 100, dans lequel une valeur de 0 indique que la culture de couverture n'a pas été cultivée dans la terre d'intérêt et la valeur de 100 indique que la culture de couverture a une densité et une hauteur optimales et a été cultivée pendant la durée entière entre deux saisons de culture principales dans la terre d'intérêt.

**4.** Système (102) pour estimer une durée de culture de couverture, le système (102) comprenant :

une mémoire (202) stockant des instructions ;
une ou plusieurs interfaces d'entrée/sortie, E/S, (206) ; et
un ou plusieurs processeurs matériels (204) couplés à la mémoire (202) par l'intermédiaire des une ou plusieurs interfaces E/S (206), dans lequel les un ou
plusieurs processeurs matériels (204) sont configurés par les instructions pour :

recevoir des premières données de série temporelle sur une année de culture pour une terre d'intérêt, provenant de données de satellite optique ;
séparer les premières données de série temporelle en une période de végétation et de suif sur la base d'un premier seuil d'indice de végétation à différence normalisée, NDVI, pour sélectionner les premières données de série temporelle associées à la période de végétation ;
déterminer une culture principale cultivée dans la terre d'intérêt en utilisant un premier modèle de classification d'apprentissage machine, ML, entraîné en analysant les premières données de série temporelle associées à la période de végétation ;
déterminer la durée de culture principale dans l'année de culture en utilisant un premier modèle basé sur la phénologie et des connaissances du domaine local ;
rejeter des données de série temporelle partielles associées à la durée de culture principale à partir des premières données de série temporelle associées à la période de végétation pour obtenir des données de série temporelle de culture de couverture dans l'année de culture ;
comparer un NDVI maximum obtenu pour les données de série temporelle de culture de couverture avec un second seuil de NDVI pour séparer les données de série temporelle de culture de couverture en tant que données de végétation non de culture si le NDVI maximum est égal ou inférieur au second seuil de NDVI et des données de végétation de culture de couverture si le NDVI maximum est supérieur au second seuil de NDVI ;
déterminer un type de culture de couverture en traitant les données de végétation de culture de couverture en utilisant un second modèle de classification ML ;
estimer une durée de culture de couverture pour le type de culture de couverture en analysant les données de végétation de culture de couverture en utilisant un second modèle basé sur la phénologie et les connaissances du domaine local, une pluralité d'indices de facteurs météorologiques utilisés pour identifier et éliminer une durée de croissance faible-nulle à partir de la durée de culture de couverture et identifier une durée d'enneigement pour éliminer une période de sommeil dans la durée de culture de couverture en raison de la présence de neige, dans lequel la présence de neige, la durée d'enneigement, la période de sommeil en raison de basses températures, et au moins l'une parmi l'herbe et les mauvaises herbes sont dérivées d'un indice de neige à différence normalisée, NDSI ; des données de satellite de radar à ouverture synthétique, SAR, en polarisation verticale-verticale, VV, et verticale-horizontale, VH ; et des données provenant d'un ou plusieurs capteurs sur site ;
déterminer la densité et la hauteur du type de culture de couverture à partir de secondes données de série temporelle acquises pour la durée de culture de couverture estimée à partir des données SAR ; et
générer un indice de culture de couverture intégré, ICCI, pour la terre d'intérêt sur la base du type de culture de couverture, de la densité et de la hauteur de la culture de couverture, de la durée de culture de couverture, et du type de culture de couverture, dans lequel l'ICCI quantifie un effort de culture de couverture consacré à la terre d'intérêt sur une échelle ascendante prédéfinie.

**5.** Système selon la revendication 4, dans lequel la terre d'intérêt correspond à une limite de champ géomarquée, localisée par l'intermédiaire d'applications s'exécutant sur des dispositifs de champ et dans lequel les connaissances du domaine local, les indices météorologiques, les données de période d'enneigement et l'indice de végétation associés à la terre d'intérêt sont obtenus avant la détermination du type de culture de couverture, l'obtention de la durée de culture de couverture et de l'ICCI.

**6.** Système selon la revendication 4, dans lequel un score pour l'ICCI a des valeurs entre 0 et 100, dans lequel une valeur de 0 indique que la culture de couverture n'a pas été cultivée dans la terre d'intérêt et la valeur de 100 indique que la culture de couverture a une densité et une hauteur optimales et a été cultivée pendant la durée entière entre deux saisons de culture principales dans la terre d'intérêt.

**7.** Un ou plusieurs supports de stockage d'informations lisibles par machine non transitoires (202) comprenant une ou plusieurs instructions qui, lorsqu'elles sont exécutées par un ou plusieurs processeurs matériels (204), amènent :

la réception de premières données de série temporelle sur une année de culture pour une terre d'intérêt, provenant de données de satellite optique ;

la séparation des premières données de série temporelle en une période de végétation et de suif sur la base d'un premier seuil d'indice de végétation à différence normalisée, NDVI, pour sélectionner les premières données de série temporelle associées à la période de végétation ;

la détermination d'une culture principale cultivée dans la terre d'intérêt en utilisant un premier modèle de classification d'apprentissage machine, ML, entraîné en analysant les premières données de série temporelle associées à la période de végétation ;

la détermination de la durée de culture principale dans l'année de culture en utilisant un premier modèle basé sur la phénologie et des connaissances du domaine local ;

le rejet de données de série temporelle partielles associées à la durée de culture principale à partir des premières données de série temporelle associées à la période de végétation pour obtenir des données de série temporelle de culture de couverture dans l'année de culture ;

la comparaison d'un NDVI maximum obtenu pour les données de série temporelle de culture de couverture avec un second seuil de NDVI pour séparer les données de série temporelle de culture de couverture en tant que données de végétation non de culture si le NDVI maximum est égal ou inférieur au second seuil de NDVI et des données de végétation de culture de couverture si le NDVI maximum est supérieur au second seuil de NDVI ;

la détermination d'un type de culture de couverture en traitant les données de végétation de culture de couverture en utilisant un second modèle de classification ML ;

l'estimation d'une durée de culture de couverture pour le type de culture de couverture en analysant les données de végétation de culture de couverture en utilisant un second modèle basé sur la phénologie et les connaissances du domaine local, une pluralité d'indices de facteurs météorologiques utilisés pour identifier et éliminer une durée de croissance faible-nulle à partir de la durée de culture de couverture et identifier une durée d'enneigement pour éliminer une période de sommeil dans la durée de culture de couverture en raison de la présence de neige, dans lequel la présence de neige, la durée d'enneigement, la période de sommeil en raison de basses températures, et au moins l'une parmi l'herbe et les mauvaises herbes sont dérivées d'un indice de neige à différence normalisée, NDSI ; des données de satellite de radar à ouverture synthétique, SAR, en polarisation verticale-verticale, VV, et verticale-horizontale, VH ; et des données provenant d'un ou plusieurs capteurs sur site ;

la détermination de la densité et de la hauteur du type de culture de couverture à partir de secondes données de série temporelle acquises pour la durée de culture de couverture estimée à partir des données SAR ; et

la génération d'un indice de culture de couverture intégré, ICCI, pour la terre d'intérêt sur la base du type de culture de couverture, de la densité et de la hauteur de la culture de couverture, de la durée de culture de couverture, et du type de culture de couverture, dans lequel l'ICCI quantifie un effort de culture de couverture consacré à la terre d'intérêt sur une échelle ascendante prédéfinie.

**8.** Un ou plusieurs supports de stockage d'informations lisibles par machine non transitoires (202) selon la revendication 7, dans lequel la terre d'intérêt correspond à une limite de champ géomarquée, localisée par l'intermédiaire d'applications s'exécutant sur des dispositifs de champ et dans lequel les connaissances du domaine local, les indices météorologiques, les données de période d'enneigement et l'indice de végétation associés à la terre d'intérêt sont obtenus avant la détermination du type de culture de couverture, l'obtention de la durée de culture de couverture et de l'ICCI.

**9.** Un ou plusieurs supports de stockage d'informations lisibles par machine non transitoires (202) selon la revendication 7, dans lequel un score pour l'ICCI a des valeurs entre 0 et 100, dans lequel une valeur de 0 indique que la culture de couverture n'a pas été cultivée dans la terre d'intérêt et la valeur de 100 indique que la culture de couverture a une densité et une hauteur optimales et a été cultivée pendant la durée entière entre deux saisons de culture principales dans la terre d'intérêt.

**FIG. 1**

System**102**

Processor(s) **204**

I/O Interface(s) **206**

Memory **202**

Database **208**

Modules **210**

FIG. 2A

FIG. 2B

300

receiving a first time series data across a crop year for a land of interest, sourced from an optical satellite data — 302

separating the first time series data into a vegetation and fallow period based on a first NDVI threshold to select the first time series data associated with the vegetation period — 304

determining a main crop cultivated in the land of interest using a trained first ML classification model by analyzing the first time series data associated with the vegetation period — 306

determining the main crop duration within the crop year using a first phenology based model and local domain knowledge — 308

discarding partial time series data associated with the main crop duration from the first time series data associated with the vegetation period to obtain a cover crop time series data within the crop year — 310

comparing a maximum NDVI obtained for the cover crop time series data with a second NDVI threshold to segregate the cover crop time series data as a non-crop vegetation data if the maximum NDVI is equal to or lower than the second NDVI threshold and a cover crop vegetation data if the maximum NDVI is greater than the second NDVI threshold — 312

A

FIG. 3A

300 ⌐

(A)

determining a type of cover crop by processing the cover crop vegetation data using a second ML classification model ⌐ 314

estimating a cover crop duration for the type of cover crop by analyzing the cover crop vegetation data using a second phenology based model and the local domain knowledge, a plurality of weather factors indices used to identify and eliminate low growth-no growth time duration from g the cover crop duration and identifying a snow duration to eliminate period of dormancy within the cover crop duration due to presence of snow ⌐ 316

determining density and height of the type of cover crop from a second time series data acquired for the estimated cover crop duration from a synthetic aperture radar satellite data ⌐ 318

generating an Integrated Cover Crop Index (ICCI) for the land of interest based on the type of the cover crop, the density and height of cover crop, and duration of the type of cover crop, wherein the ICCI quantifies a cover crop effort put into the land of interest on a predefined ascending scale ⌐ 320

FIG. 3B

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202321019091

- CA 3186476 A1